# EUROPÄISCHE PATENTSCHRIFT

(11) **EP 2 603 715 B1**
(45) Veröffentlichungstag und Bekanntmachung des Hinweises auf die Patenterteilung: **28.10.2015**
(21) Anmeldenummer: 11725724.6
(22) Anmeldetag: 10.06.2011
(51) Int. Cl.: F16F 9/04, F16F 9/05

(54) **ABZUGSSICHERUNG FÜR LUFTFEDERBALG**
TRIGGER LOCK FOR AN AIR SPRING BELLOWS
SYSTEME ANTI-EXTRACTION POUR SOUFFLET PNEUMATIQUE

(30) Priorität: 13.08.2010 DE 102010036972
(43) Veröffentlichungstag der Anmeldung: 19.06.2013
(73) Patentinhaber: ContiTech Luftfedersysteme GmbH, 30165 Hannover (DE)
(72) Erfinder: SCHAEFERS, Dominik, 30625 Hannover (DE)
(74) Vertreter: Finger, Karsten
(86) Internationale Anmeldenummer: PCT/EP2011/059662
(87) Internationale Veröffentlichungsnummer: WO 2012/019805

(56) Entgegenhaltungen:
- DE-A1- 4 115 028
- DE-A1-102008 055 511
- DE-B- 1 285 792
- GB-A- 1 001 515
- US-A- 5 382 006
- US-A1- 2008 246 198

## Beschreibung

Die Erfindung betrifft eine Luftfeder, aufweisend
einen Abrollbalg mit einer konusförmig ausgebildeten Öffnung, die einen durch einen Kern verstärkten Wulst aufweist und
einen Abrollkolben mit einem Konussitz und einer Auflageschulter für den Abrollbalg, wobei der Abrollbalg im montierten Zustand mit seinem dem Abrollkolben zugeordneten Ende mittels einer Konus-Klemmsitz-Verbindung mit dem Konussitz des Abrollkolbens luftdicht verbunden ist und der Abrollbalg sich im eingefederten Zustand der Luftfeder auf der Auflageschulter gegen den Abrollkolben abstützt.

Derartige Luftfedern sind an sich bekannt und vorwiegend bei Nutzfahrzeugen, zunehmend aber auch bei Anhängern im Einsatz. Dabei ist die Belastung der Luftfeder meist eine Druckbelastung, so dass die Konus-Klemmsitz-Verbindung eine hohe Sicherheit bietet.

Kommt es jedoch zu einer starken Ausfederung, die insbesondere bei der Verladung von Anhängern, beispielsweise auf Eisenbahnwaggons, auftreten kann, ist die Konus-Klemmsitz-Verbindung auch auf Zug belastet. In ungünstigen Fällen kann es dabei zu einer Lösung der Konus-Klemmsitz-Verbindung kommen.

In der DE 1 285 792 B ist eine derartige Luftfeder offenbart, bei der diesem Nachteil durch aufgeschraubte Befestigungsscheiben begegnet werden soll. Dieser Vorschlag bedingt jedoch eine etwas aufwendige Montage, falls mehrere Scheiben eingesetzt werden müssen. Anderenfalls ist die Konus-Klemmsitz-Verbindung nur an einer einzigen Stelle entsprechend gesichert, was bei Zugbelastung immer noch ein örtliches Lösen der Konüs-Klemmsitz-Verbindung zulässt.

In der DE 4 115 028 A1 ist vorgeschlagen, den Konussitz mittels Gewindegang-Abschnitten zu verbessern. Durch die Gewindegang-Abschnitte wird der Abrollbalg zwar recht zuverlässig auch bei Zugbelastung fest auf dem Konus gehalten, jedoch muss der Abrollbalg bei der Montage gegen den Abrollkolben verdreht werden, was aufwendige Vorrichtungen erfordert. Außerdem können die Gewindegang-Abschnitte in das Elastomer des Abrollbalges einschneiden und so ein vorzeitiges Versagen des Abrollbalges auslösen.

Der Erfindung liegt die Aufgabe zugrunde, die Sicherheit der Konus-Klemmsitz-Verbindung bei Luftfedern der geschilderten Art bei Abzugskräften zu verbessern.

Diese Aufgabe wird dadurch gelöst, dass der Abrollkolben eine ringförmige Nut aufweist, die von seinem dem Konussitz zugeordneten ersten Ende beabstandet derart angeordnet ist, dass sie zwischen dem ersten Ende des Abrollkolbens und dem Konussitz des Abrollkolbens zu liegen kommt und die Luftfeder einen Sicherungsring mit einem Spalt aufweist, der nach der Montage des Abrollbalges auf dem Konussitz in die Nut einclipsbar ist, wobei der kernverstärkte, konusförmige Wulst des Abrollbalges zwischen dem Sicherungsring und der Auflageschulter zu liegen kommt und durch den Sicherungsring am Abrutschen von dem Konussitz des Abrollkolbens gehindert ist.

Der Sicherungsring mit seinem Spalt wirkt quasi wie ein Sprengring und sichert die Konus-Klemmsitz-Verbindung gegen unbeabsichtigtes Lösen. Die Abzugskräfte zum Lösen des Abrollbalges vom Abrollkolben sind bei montiertem Sicherungsring signifikant erhöht. Die Montage des Ringes ist sehr einfach und kann bei entsprechend ausgebildeter Vorrichtung im gleichen Arbeitsgang mit dem Aufschieben des Balgwulstes auf den Konussitz erfolgen. Weitere Arbeitsgänge oder Drehbewegungen der Vorrichtung sind nicht erforderlich.

Anhand der Zeichnung wird nachstehend ein Beispiel der Erfindung näher erläutert. Es zeigt
- Fig. 1: ein erfindungsgemäßer Luftfeder-Abrollkolben als Längsschnitt (Prinzipdarstellung),
- Fig. 2: ein erfindungsgemäßer Luftfeder-Abrollkolben in einem Teilschnitt im montierten Zustand,
- Fig. 3: die Durchmesserverhältnisse an der erfindungsgemäßen Luftfeder und
- Fig. 4: schematische Abzugskraft-Weg-Verläufe der erfindungsgemäßen Luftfeder ohne und mit Sperrring.

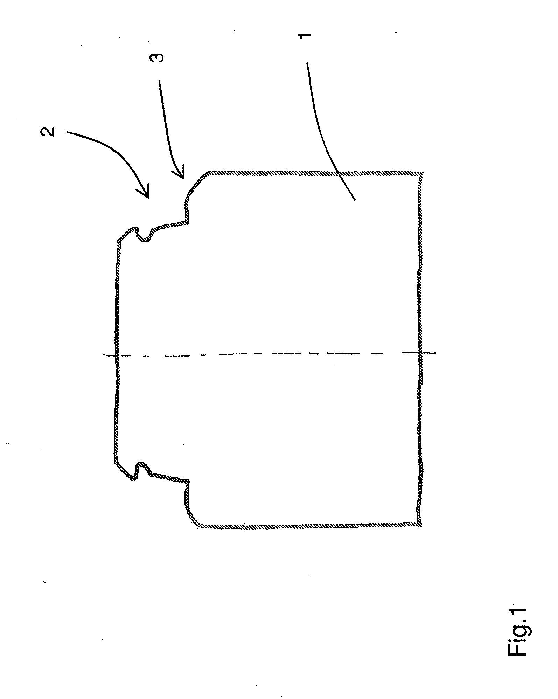

Die Figur 1 zeigt einen Abrollkolben 1 als Längsschnitt in einer prinzipiellen Darstellung. Der Abrollkolben 1 weist einen Konussitz 2 und eine Auflageschulter 3 für einen hier nicht gezeigten Abrollbalg auf.

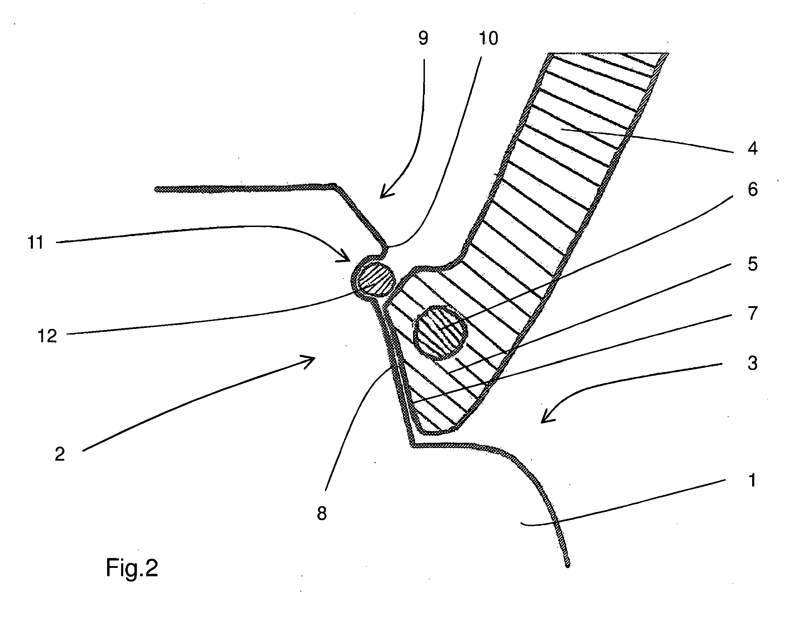

In der Figur 2 ist der Konussitz 2 mit Auflageschulter 3 mit einem bereits montierten Abrollbalg 4 aus einem elastomeren Material in einem Teillängsschnitt gezeigt. Der Abrollbalg 4 ist in der gezeigten Position voll ausgefedert, so dass er sich nicht auf der Auflageschulter 3 abstützt. Der Abrollbalg 4 weist an seinem dem Abrollkolben 1 zugeordneten Ende einen Wulst 5 auf, der mit einem metallischen Kern 6 verstärkt ist. Der Wulst 5 weist eine mit dem Konussitz 2 korrespondierende Öffnung mit einer konusförmigen Dichtfläche 7 auf. Durch die Elastizität des Elastomermaterials und den Kern 6 bildet die Dichtfläche 7 mit einer ebenfalls konischen Sitzfläche 8 des Konussitzes 2 eine luftdicht abschließende Verbindung.

Der Konussitz 2 weist weiterhin einen Einfädelungs- und Aufsteckbereich 9 auf. Dieser dient als Montagehilfe beim Aufpressen des Wulstes 5 auf den Konussitz 2.

Der Einfädelungs- und Aufsteckbereich 9 ragt mit einer Rastnase 10 radial derart nach außen, dass der Außendurchmesser der Rastnase 10 geringfügig größer ist als der kleinste Durchmesser der konusförmigen Dichtfläche 7. Dadurch ist während der Montage sichergestellt, dass der Wulst 5 nicht unbeabsichtigt vom Konusbereich 2 abrutscht. Die Haltekräfte der Rastnase 10 sind allerdings gering, da der Durchmesserunterschied zwischen Rastnase 10 und Dichtfläche 7 nur klein sein darf, um Beschädigungen der Dichtfläche 7 während der Montage zu vermeiden.

Der Konusbereich 2 weist daher zwischen der Rastnase 10 des Einfädelungs- und Aufstecksbereichs 9 und der Sitzfläche 8 eine Ringnut 11 auf, in die ein thorusförmiger Sperrring 12 eingreift. Der Sperrring 12 ist aus einem federnden, metallischen Werkstoff ausgebildet und an einer hier nicht gezeigten Stelle mit einem Spalt aufgetrennt. Dadurch ist der Sperrring 12 aufweitbar und, ähnlich einem Sprengring, über den Einfädelungs- und Aufsteckbereich 9 und die Rastnase 10 in die Ringnut 11 einclipsbar. Der Sperrring 12 weist einen äußeren Durchmesser auf, der gegenüber der Rastnase 10 deutlich vergrößert ist. Der Wulst 5 des Abrollbalges 4 ist daher zwischen Sperrring 12 und Auflageschulter 3 festgelegt und gegen Abziehen von der Sitzfläche 8 gesichert.

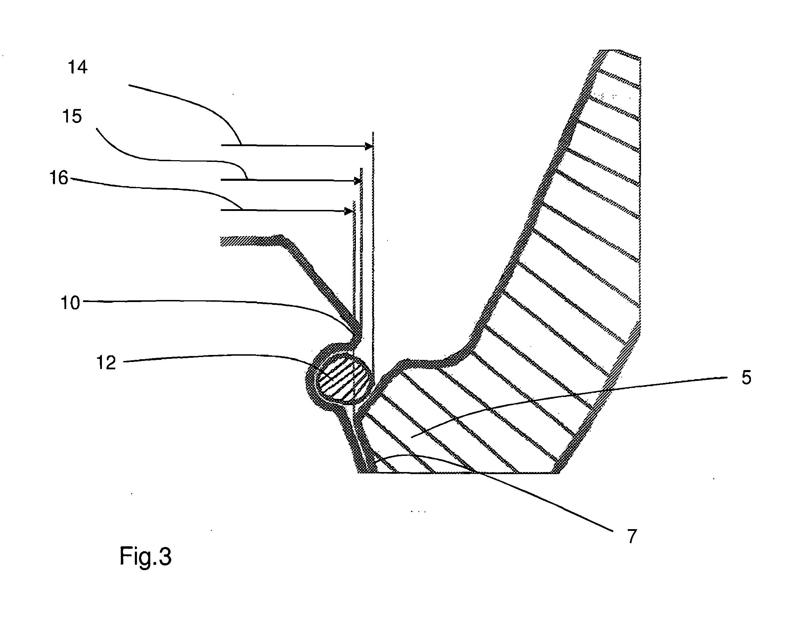

In der Figur 3 sind die Durchmesserverhältnisse in einer Ausschnittsvergrößerung nochmals näher erläutert. Der Außendurchmesser 14 des Sperrringes 12 ist deutlich größer als der Außendurchmesser der Rastnase 10 und damit auch deutlich größer als der Innendurchmesser 16 der konusförmigen Dichtfläche 7 des Wulstes 5.

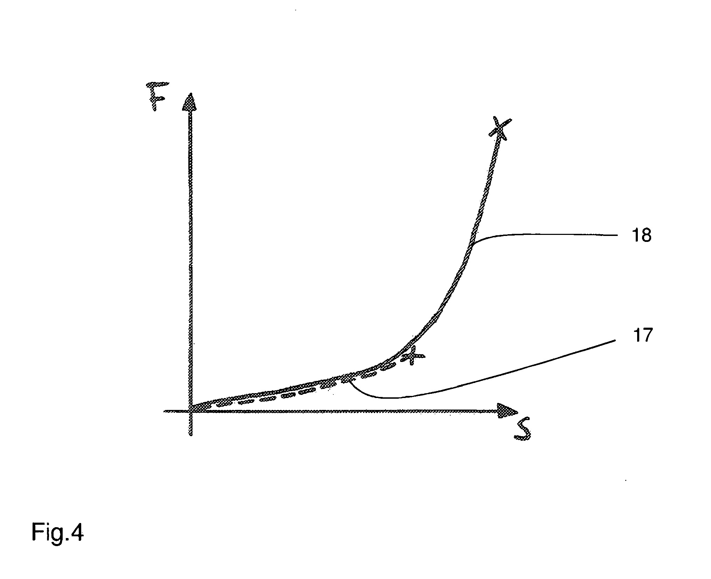

In der Figur 4 sind schematische Kraftwegverläufe der Abzugskräfte des Abrollbalges vom Konussitz gezeigt. Die gestrichelte Kurve 17 zeigt den Verlauf der Abzugskraft F über der Abzugshöhe S ohne Sperrring, die durchgezogene Kurve 18 die Abzugskraft mit Sperrring. Die Abzugskraft F nach Kurve 18 erreicht deutlich höhere Werte, wobei auch ersichtlich ist, dass die Abzugshöhe, die dem Ausfederungsweg einer Luftfeder entspricht, nach Kurve 18 mit Sperring deutlich größer ist. Die Sicherheit gegen Abziehen des Abrollbalges vom Konussitz des Abrollkolbens ist somit entscheidend verbessert.

### Bezugszeichenliste

### (Teil der Beschreibung)

- 1: Abrollkolben
- 2: Konussitz
- 3: Auflageschulter
- 4: Abrollbalg
- 5: Wulst des Abrollbalges 4
- 6: Kern des Wulstes 5
- 7: Dichtfläche des Wulstes 5
- 8: Sitzfläche des Konussitzes 2
- 9: Einfädelungs- und Aufsteckbereich
- 10: Rastnase
- 11: Ringnut
- 12: Sperrring
- 14: Außendurchmesser des Sperrringes 12
- 15: Außendurchmesser der Rastnase 11
- 16: Kleinster Innendurchmesser des Wulstes 5
- 17: Kraft-Weg-Kurve ohne Sperrring
- 18: Kraft-Weg-Kurve mit Sperrring

## Patentansprüche

1. Luftfeder, aufweisend
einen Abrollbalg (4) mit einer konusförmig ausgebildeten Öffnung, die einen durch einen Kern (6) verstärkten Wulst (5) aufweist und
einen Abrollkolben (1) mit einem Konussitz (2) und einer Auflageschulter (3) für den Abrollbalg (4),
wobei der Abrollbalg (4) im montierten Zustand mit seinem dem Abrollkolben (1) zugeordneten Ende mittels einer Konus-Klemmsitz-Verbindung mit dem Konussitz (2) des Abrollkolbens (1) luftdicht verbunden ist und der Abrollbalg (4) sich im eingefederten Zustand der Luftfeder auf der Auflageschulter (3) gegen den Abrollkolben (1) abstützt,
**dadurch gekennzeichnet, dass**
der Abrollkolben (1) eine ringförmige Nut (11) aufweist, die von seinem dem Konussitz (2) zugeordneten ersten Ende beabstandet derart angeordnet ist, dass sie zwischen dem ersten Ende des Abrollkolbens (1) und dem Konussitz (2) des Abrollkolbens (1) zu liegen kommt und die Luftfeder einen Sperrring (12) mit einem Spalt aufweist, der nach der Montage des Abrollbalges (4) auf dem Konussitz (2) in die Nut (11) einclipsbar ist, wobei der kernverstärkte, konusförmige Wulst (5) des Abrollbalges (4) zwischen dem Sperrring (12) und der Auflageschulter (3) zu liegen kommt und durch den Sperrring (12) am Abrutschen von dem Konussitz (2) des Abrollkolbens (1) gehindert ist.

## Claims

1. Pneumatic spring, having
a rolling bellows (4) having a conically formed opening which has a bead (5) which is reinforced by a core (6), and
a rolling piston (1) having a conical seat (2) and a supporting shoulder (3) for the rolling bellows (4),
the rolling bellows (4), in the mounted state, being connected with its end which is assigned to the rolling piston (1) in an airtight manner to the conical seat (2) of the rolling piston (1) by means of a cone force fit connection, and, in the compressed state of the pneumatic spring, the rolling bellows (4) being supported on the supporting shoulder (3) with respect to the rolling piston (1),
**characterized in that**
the rolling piston (1) has an annular groove (11) which is arranged spaced apart from its first end which is assigned to the conical seat (2), in such a way that it comes to lie between the first end of the rolling piston (1) and the conical seat (2) of the rolling piston (1) and the pneumatic spring has a locking ring (12) with a gap, which locking ring (12) can be clipped into the groove (11) after the mounting of the rolling bellows (4) on the conical seat (2), the reinforced-core, conical bead (5) of the rolling bellows (4) coming to lie between the locking ring (12) and the supporting shoulder (3) and being prevented by the locking ring (12) from sliding off the conical seat (2) of the rolling piston (1).

## Revendications

1. Ressort pneumatique, présentant
- un soufflet déroulant (4) comprenant une ouverture réalisée sous forme conique qui présente un talon (5) renforcé par une tringle (6) et
- un piston déroulant (1) comprenant un siège conique (2) et un épaulement d'appui (3) pour le soufflet déroulant (4),
le soufflet déroulant (4), dans l'état monté, étant connecté de manière étanche à l'air par son extrémité associée au piston déroulant (1), au moyen d'une connexion à cône et ajustement serré au siège conique (2) du piston déroulant (1) et le soufflet déroulant (4) s'appuyant, dans l'état comprimé du ressort, sur l'épaulement d'appui (3) contre le piston déroulant (1),
**caractérisé en ce que**
le piston déroulant (1) présente une rainure de forme annulaire (11) qui est disposée à distance de sa première extrémité associée au siège conique (2) de telle sorte qu'elle vienne se placer entre la première extrémité du piston déroulant (1) et le siège conique (2) du piston déroulant (1) et le ressort pneumatique présente une bague d'arrêt (12) avec une fente qui, après le montage du soufflet déroulant (4) sur le siège conique (2), peut être enclipsée dans la rainure (11), le talon de forme conique (5) renforcé par une tringle du soufflet déroulant (4) venant se placer entre la bague d'arrêt (12) et l'épaulement d'appui (3) et, du fait de la bague d'arrêt (12), ne pouvant pas glisser du siège conique (2) du piston déroulant (1).
